# EUROPEAN PATENT APPLICATION

(11) **EP 4 610 575 A1**
(43) Date of publication of application: **03.09.2025**
(21) Application number: 23881152.5
(22) Date of filing: 26.04.2023
(51) Int. Cl.: F24F 11/30, F24F 11/65

(54) **RADAR DETECTION METHOD, AIR CONDITIONER, AND COMPUTER-READABLE STORAGE MEDIUM**

(30) Priority: 28.10.2022 CN 202211337993
(71) Applicant: GD Midea Air-Conditioning Equipment Co., Ltd., Foshan, Guangdong 528311 (CN)
(72) Inventor: DUAN, Xiaohua, Foshan, Guangdong 528311 (CN)
(74) Representative: Ran, Handong
(86) International application number: PCT/CN2023/090972
(87) International publication number: WO 2024/087557

(57) **Abstract**

A radar detection method, an air conditioner, and a computer-readable storage medium, related to the technical field of digital signal processing. The method comprises: acquiring the operating state and/or operating parameters of an air outlet assembly at a present moment (S10); determining an interference signal corresponding to the operating state and/or operating parameters (S20); based on the interference signal, filtering an intermediate frequency signal collected by a radar module (S30); and according to the filtered intermediate frequency signal, determining a radar detection result (S40).

## Description

This application claims priority to Chinese Patent Application No. 202211337993.2, filed on October 28, 2022, the entire contents of which are incorporated herein by reference.

### TECHNICAL FIELD

The present application relates to the technical field of digital signal processing, and in particular to a radar detection method, an air conditioner, and a computer-readable storage medium.

### BACKGROUND

At present, air conditioners with anti-cold wind mode usually have a human position detection function, which uses millimeter wave radar sensors to detect whether there are people around the air conditioner. When a person is detected approaching the air conditioner, the anti-cold wind mode is entered to prevent the cold wind from the air conditioner from blowing directly to the user. The millimeter wave radar sensor sends modulated electromagnetic waves through the transmitting antenna, and then receives the electromagnetic wave signal reflected by the target through the receiving antenna, so as to detect the distance, speed, angle and other information of the target by analyzing the electromagnetic wave signal.

For such air conditioners equipped with millimeter-wave radar sensors, the movement of air conditioner components such as the fan, air deflector, and louvers in the air conditioner may cause radar misjudgment. In related technical solutions, the sensitivity of the millimeter-wave radar sensor is usually reduced by increasing the detection threshold, thereby eliminating the interference caused by the air outlet components inside the air conditioner.

However, this method of eliminating interference from the air outlet components inside the air conditioner by increasing the detection threshold and reducing the sensitivity can easily result in the radar failing to detect people, causing a problem of low detection accuracy.

The above content is provided solely to assist in understanding the technical solution of the present application and does not constitute an admission that the above content is prior art.

### SUMMARY

### TECHNICAL PROBLEM

The main objective of the present application is to provide a radar detection method, aiming to solve the problem of how to improve the accuracy of radar detection in an air conditioner.

### TECHNICAL SOLUTION

In order to achieve the above objective, the present application provides a radar detection method, including:
obtaining a current operating state and/or a current operating parameter of the air outlet component;
determining an interference signal corresponding to the operating state and/or the operating parameter;
filtering an intermediate frequency signal collected by the radar module based on the interference signal; and
determining a radar detection result according to the filtered intermediate frequency signal.

In some implementations, the determining the interference signal corresponding to the operating state and/or the operating parameter includes:
obtaining a historical intermediate frequency signal collected by the radar module in response to that no human body exists in a detection area of the radar module; and
determining the interference signal corresponding to the operating state and/or the operating parameter according to the historical intermediate frequency signal.

In some embodiments, the air outlet component includes a wind wheel and an air deflector, the operating parameter includes a wind wheel speed, the operating state includes that the air deflector is in an up and down wind sweeping state and/or a horizontal wind sweeping state, and before the determining the interference signal corresponding to the operating state and/or the operating parameter, the method further includes:
determining an intermediate frequency signal collected by the radar module as the historical intermediate frequency signal in response to that no human body exists in the detection area at a historical moment and the wind wheel is at different wind wheel speeds; or
determining the intermediate frequency signal collected by the radar module as the historical intermediate frequency signal in response to that no human body exists in the detection area at a historical moment, the air deflector is in an up and down wind sweeping state, and the wind wheel is at different wind wheel speeds; or
determining the intermediate frequency signal collected by the radar module as the historical intermediate frequency signal in response to that no human body exists in the detection area at a historical moment, the air deflector is in a horizontal wind sweeping state, and the wind wheel is at different wind wheel speeds; or
determining the intermediate frequency signal collected by the radar module as the historical intermediate frequency signal in response to that no human body exists in the detection area at a historical moment, the air deflector is in both a horizontal wind sweeping state and an up and down wind sweeping state, and the wind wheel is at different wind wheel speeds; and
associating and storing the historical intermediate frequency signal with the wind wheel speed and/or the operating state of the air deflector corresponding to the historical intermediate frequency signal.

In some implementations, the filtering the intermediate frequency signal collected by the radar module based on the interference signal includes:
obtaining the interference signal corresponding to the air outlet component under a current operating parameter and/or current operating state, and an intermediate frequency signal to be processed collected by the radar module of the air outlet component at a current moment; and
filtering the intermediate frequency signal to be processed based on the interference signal to obtain a filtered intermediate frequency signal.

In some embodiments, the determining the radar detection result according to the filtered intermediate frequency signal includes:
determining a distance between a human body and the air conditioner according to the filtered intermediate frequency signal;
in response to that the distance is less than a distance threshold, determining that the radar detection result is that a human body exists in a detection area of the radar module; or
in response to that the distance is greater than or equal to the distance threshold, determining that the radar detection result is that no human body exists in the detection area of the radar module.

In some embodiments, the air outlet component includes a wind wheel and an air deflector, and before the determining the radar detection result according to the filtered intermediate frequency signal, the method further includes:
determining a distance threshold set according to a wind wheel speed;
selecting the distance threshold from the distance threshold set according to an operating state of the air deflector, the distance threshold is positively correlated with the wind wheel speed.

In some embodiments, the air outlet component includes a wind wheel and an air deflector, and after the determining the radar detection result according to the filtered intermediate frequency signal, the method further includes:
in response to the radar detection result indicating that a human body exists in the detection area of the radar module, obtaining a target speed of the wind wheel and a target direction of the air deflector in an anti-cold wind mode, the target speed is less than a current wind wheel speed; and
controlling the wind wheel to operate at the target speed, and setting a wind guiding direction of the air deflector to the target direction to control the air conditioner to enter the anti-cold wind mode.

In some embodiments, after the controlling the wind wheel to operate at the target speed, and setting the wind guiding direction of the air deflector to the target direction to control the air conditioner to enter the anti-cold wind mode, the method further includes:
in response to that the radar module does not detect a human body entering the detection area within a preset detection time, controlling the air conditioner to exit the anti-cold wind mode; or
in response to detecting that an air outlet temperature of the air conditioner is greater than a preset temperature threshold, controlling the air conditioner to exit the anti-cold wind mode.

In addition, to achieve the above objective, the present application further provides an air conditioner, including a radar module, a memory, a processor, and a radar detection program stored in the memory and executable on the processor. The radar detection program, when executed by the processor, implements the steps of the radar detection method as described above.

In addition, to achieve the above objective, the present application further provides a computer-readable storage medium. The computer-readable storage medium stores a radar detection program, and when executed by a processor, the steps of the radar detection method as described above are implemented.

### TECHNICAL EFFECT

The embodiment of the present application provides a radar detection method, an air conditioner, and a computer-readable storage medium. The method includes: obtaining a current operating state and/or a current operating parameter of the air outlet component; determining an interference signal corresponding to the operating state and/or the operating parameter; filtering an intermediate frequency signal collected by the radar module based on the interference signal; and determining a radar detection result according to the filtered intermediate frequency signal. By eliminating the interference signal part in the intermediate frequency signal collected by the radar module in the air conditioner, errors in the intermediate frequency signal collected in the radar module, caused by the movement of the air outlet component inside the air conditioner, can be avoided, thereby achieving the effect of improving the accuracy of radar detection.

### BRIEF DESCRIPTION OF THE DRAWINGS

FIG. 1 is a schematic diagram of an architecture of a hardware operating environment of an air conditioner according to an embodiment of the present application.
FIG. 2 is a flowchart of a radar detection method according to a first embodiment of the present application.
FIG. 3 is a flowchart of the radar detection method according to a second embodiment of the present application.
FIG. 4 is a flowchart of the radar detection method according to a third embodiment of the present application.
FIG. 5 is a detailed flowchart of the radar detection method according to the third embodiment of the present application.
FIG. 6 is a flowchart of the radar detection method according to a fourth embodiment of the present application.

The realization of the purposes, functional features, and advantages of the present application will be further explained in conjunction with embodiments and with reference to the accompanying drawings.

### DETAILED DESCRIPTION OF THE EMBODIMENTS

Millimeter-wave radar transmits and receives millimeter-wave signals reflected by moving targets, and mixes them with the original transmitted signals to obtain intermediate-frequency signals. By analyzing and processing the intermediate-frequency signals, the distance and speed of the target can be calculated.

When the wind wheel of the air conditioner rotates, the radar intermediate frequency signal will form a fixed frequency and its multiple frequency interference signal. The frequency is related to the wind wheel speed. The lower the speed, the lower the frequency. When the air deflector is in the swing-open state, a lower frequency periodic interference signal will be superimposed. The period is consistent with the swing period of the air deflector. In order to detect the human body more accurately without causing misjudgment, the radar algorithm needs to filter out the above motion interference signals of the wind wheel or air deflector. However, if the radar does not know the operating state of the air conditioner, it can only use the method of complete filtering for human body detection, which will result in too many signals being filtered out when the air deflector is not moving, thereby reducing the sensitivity of human body detection.

The present application adopts an adaptive human body detection method that synchronizes the operating state of the air conditioner in real time. The air conditioner main control sends information such as the fan speed and the swing state of the air deflector to the radar module in real time. The radar module adaptively filters out the corresponding interference signals according to the current operating state of the air conditioner, thereby avoiding a decrease in the sensitivity of human body detection caused by filtering out too many intermediate frequency signals. After the user turns on the automatic anti-cold wind function, the radar detects that a human body has entered the preset target area, and automatically turns on the anti-cold wind mode to prevent the air conditioner from blowing directly on the human body. When the radar does not detect a person for more than a preset time (for example, 30 seconds), it automatically exits the anti-cold wind mode and supplies air normally to improve the cooling effect.

In order to better understand the above technical solution, exemplary embodiments of the present application will be described in more detail below with reference to the accompanying drawings. Although exemplary embodiments of the present application are shown in the accompanying drawings, it should be understood that the present application can be implemented in various forms and should not be limited by the embodiments described herein. On the contrary, these embodiments are provided to enable a more thorough understanding of the present application and to fully convey the scope of the present application to those skilled in the art.

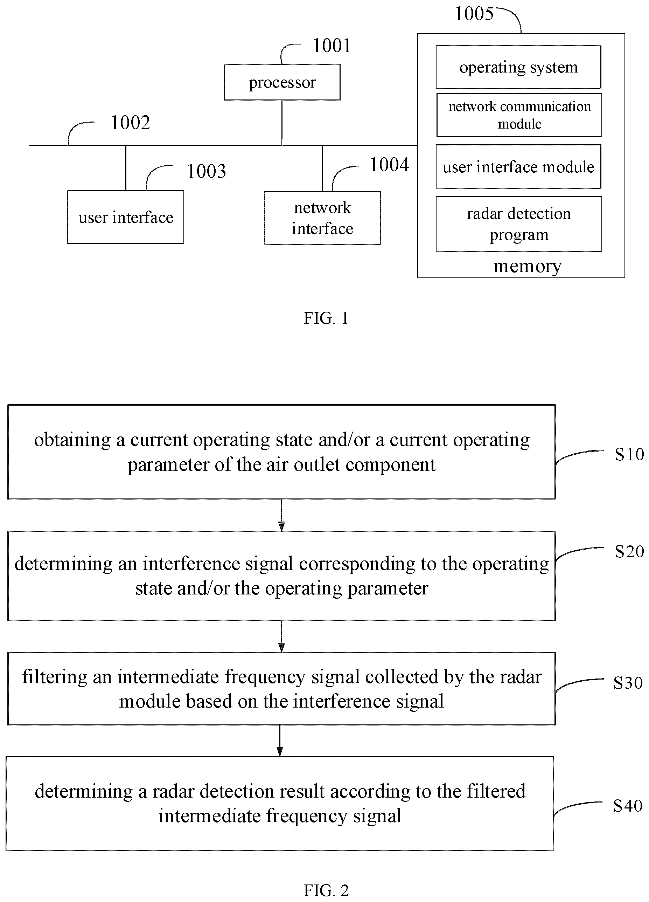

As an implementation solution, FIG. 1 is a schematic structural diagram of a hardware operating environment involved in an embodiment of the present application.

As shown in FIG. 1, the air conditioner may include: a processor 1001, such as a central processing unit (CPU), a memory 1005, a user interface 1003, a network interface 1004, and a communication bus 1002. The communication bus 1002 is used to realize the connection and communication between these components. The user interface 1003 may include a display, an input unit such as a keyboard, and the user interface 1003 may also include a standard wired interface and a wireless interface. The network interface 1004 may include a standard wired interface and a wireless interface (such as a Wireless-Fidelity interface). The memory 1005 may be a high-speed random access memory (RAM), or a stable memory (non-volatile memory), such as a disk memory. The memory 1005 may also be a storage device independent of the aforementioned processor 1001.

Those skilled in the art will appreciate that the air conditioner structure shown in FIG. 1 does not limit the air conditioner and may include more or fewer components than shown, or a combination of certain components, or a different arrangement of components.

As shown in FIG. 1, the memory 1005 as a storage medium may include an operating system, a network communication module, a user interface module and a radar detection program. The operating system is a program for managing and controlling the hardware and software resources of the air conditioner, based on the operation of the radar detection program and other software or programs.

In the structure shown in FIG. 1, the user interface 1003 is mainly used to connect to the terminal and communicate data with the terminal; the network interface 1004 is mainly used for the background server and communicates data with the background server; the processor 1001 can be used to call the radar detection program stored in the memory 1005.

In an embodiment, the air conditioner includes: a memory 1005, a processor 1001, and a radar detection program stored in the memory and executable on the processor.

When the processor 1001 calls the radar detection program stored in the memory 1005, the following operations are performed:
obtaining a current operating state and/or a current operating parameter of the air outlet component;
determining an interference signal corresponding to the operating state and/or the operating parameter;
filtering an intermediate frequency signal collected by the radar module based on the interference signal; and
determining a radar detection result according to the filtered intermediate frequency signal.

When the processor 1001 calls the radar detection program stored in the memory 1005, the following operations are performed:
obtaining a historical intermediate frequency signal collected by the radar module in response to that no human body exists in a detection area of the radar module; and
determining the interference signal corresponding to the operating state and/or the operating parameter according to the historical intermediate frequency signal.

When the processor 1001 calls the radar detection program stored in the memory 1005, the following operations are performed:
determining an intermediate frequency signal collected by the radar module as the historical intermediate frequency signal in response to that no human body exists in the detection area at a historical moment and the wind wheel is at different wind wheel speeds; or
determining the intermediate frequency signal collected by the radar module as the historical intermediate frequency signal in response to that no human body exists in the detection area at a historical moment, the air deflector is in an up and down wind sweeping state, and the wind wheel is at different wind wheel speeds; or
determining the intermediate frequency signal collected by the radar module as the historical intermediate frequency signal in response to that no human body exists in the detection area at a historical moment, the air deflector is in a horizontal wind sweeping state, and the wind wheel is at different wind wheel speeds; or
determining the intermediate frequency signal collected by the radar module as the historical intermediate frequency signal in response to that no human body exists in the detection area at a historical moment, the air deflector is in both a horizontal wind sweeping state and an up and down wind sweeping state, and the wind wheel is at different wind wheel speeds; and
associating and storing the historical intermediate frequency signal with the wind wheel speed and/or the operating state of the air deflector corresponding to the historical intermediate frequency signal.

When the processor 1001 calls the radar detection program stored in the memory 1005, the following operations are performed:
obtaining the interference signal corresponding to the air outlet component under a current operating parameter and/or current operating state, and an intermediate frequency signal to be processed collected by the radar module of the air outlet component at a current moment; and
filtering the intermediate frequency signal to be processed based on the interference signal to obtain a filtered intermediate frequency signal.

When the processor 1001 calls the radar detection program stored in the memory 1005, the following operations are performed:
determining a distance between a human body and the air conditioner according to the filtered intermediate frequency signal;
in response to that the distance is less than a distance threshold, determining that the radar detection result is that a human body exists in a detection area of the radar module; or
in response to that the distance is greater than or equal to the distance threshold, determining that the radar detection result is that no human body exists in the detection area of the radar module.

When the processor 1001 calls the radar detection program stored in the memory 1005, the following operations are performed:
determining a distance threshold set according to a wind wheel speed;
selecting the distance threshold from the distance threshold set according to an operating state of the air deflector, the distance threshold is positively correlated with the wind wheel speed.

When the processor 1001 calls the radar detection program stored in the memory 1005, the following operations are performed:
in response to the radar detection result indicating that a human body exists in the detection area of the radar module, obtaining a target speed of the wind wheel and a target direction of the air deflector in an anti-cold wind mode, the target speed is less than a current wind wheel speed; and
controlling the wind wheel to operate at the target speed, and setting a wind guiding direction of the air deflector to the target direction to control the air conditioner to enter the anti-cold wind mode.

When the processor 1001 calls the radar detection program stored in the memory 1005, the following operations are performed:
in response to that the radar module does not detect a human body entering the detection area within a preset detection time, controlling the air conditioner to exit the anti-cold wind mode; or
in response to detecting that an air outlet temperature of the air conditioner is greater than a preset temperature threshold, controlling the air conditioner to exit the anti-cold wind mode.

According to the hardware architecture of the air conditioner based on the above-mentioned digital signal processing technology, some embodiments of the radar detection method of the present application are provided.

As shown in FIG. 2, in a first embodiment, the radar detection method includes the following steps:
step S10, obtaining a current operating state and/or a current operating parameter of the air outlet component.

In an embodiment, the operating state and/or operating parameters of the air outlet component at the current moment are obtained. The air outlet component is characterized as a component inside the air conditioner that is related to air outlet and affects the detection accuracy of the radar module during operation. The operating state of the air outlet component includes a moving state and a stationary state. The operating parameters of the air outlet component are characterized as parameters used by the main control module in the air conditioner to control the operation of the air outlet component, such as the wind wheel speed and the compressor frequency.

In some embodiments, the air outlet component includes components such as a wind wheel, an air deflector and/or a louver inside the air conditioner.

In some embodiments, when the air outlet component includes a wind wheel, the operating parameter corresponding to the wind wheel is the wind wheel speed.

In some embodiments, when the air outlet component includes an air deflector, the operating parameter corresponding to the air deflector is the swing frequency of the air deflector.

In this embodiment, the swing frequency of the air deflector is a parameter set when the air conditioner leaves the factory. Therefore, in this embodiment, if the air outlet component includes an air deflector, it is not necessary to consider the operating parameters of the air deflector, but the operating state of the air deflector. In some embodiments, the operating state of the air deflector includes a horizontal sweeping state, an up-and-down sweeping state, and an up-and-down horizontal sweeping state.

Step S20, determining an interference signal corresponding to the operating state and/or the operating parameter.

In this embodiment, when the wind wheel of the air conditioner rotates, the intermediate frequency signal collected in the radar module will form an interference signal of a fixed frequency and its multiple frequency, and the frequency of the interference signal is positively correlated with the speed of the wind wheel, that is, the lower the speed, the lower the frequency. When the air deflector is in a swing-open state, a periodic interference signal of a lower frequency will be superimposed, and the period is consistent with the swing period of the air deflector. Therefore, after obtaining the operating state and/or operating parameters of the air outlet component at the current moment, the operating state and/or operating parameters are sent to the radar module, and the radar module adaptively filters out the corresponding interference signal according to the current operating state of the air conditioner, thereby avoiding a decrease in the sensitivity of human body detection caused by filtering out too many intermediate frequency signals.

In some implementations, the interference signal may be an intermediate frequency signal. The radar module sends an original signal based on a preset interval and receives an echo signal, and obtains the intermediate frequency signal by mixing the echo signal and the original signal.

In some embodiments, the interference signal can be determined by pre-recording the intermediate frequency signals collected by the radar module of the air conditioner under different operating states and/or operating parameters, and storing them in a preset database as interference signals. When the current operating state and/or the current operating parameters of the air outlet component of the air conditioner are obtained, the database is queried for the intermediate frequency signal corresponding to the operating state and/or operating parameters as the corresponding interference signal.

For example, in some embodiments, the air outlet component of the air conditioner includes a wind wheel and an air deflector. The operating parameter interval corresponding to the wind wheel is [1000 rpm-2000 rpm], and the operating state of the air deflector is a horizontal sweeping state and an up and down sweeping state. When the air deflector is not in operation (i.e. the air conditioner is not in the wind sweeping mode), the radar module records that when the wind wheel speed is 1000 rpm, an interference signal H1 of 8 Hz and its multiples is generated, and when the wind wheel speed is 1500 rpm, an interference signal H2 of 11 Hz and its multiples is generated. When the wind wheel speed is 2000 rpm, an interference signal H3 of 14 Hz and its multiples is generated. When the air deflector is in operation (taking the movement state as the up and down wind sweeping state as an example), the radar module records that when the wind wheel speed is 1000 rpm, a low-frequency interference signal H4 of 8 Hz and its multiples is generated, and when the wind wheel speed is 1500 rpm, a low-frequency interference signal H5 of 11 Hz and its multiples is generated, and when the wind wheel speed is 2000 rpm, a low-frequency interference signal H6 of 14 Hz and its multiples is generated. Finally, the interference signals H1~H6 are associated and stored with the corresponding wind wheel speed and/or the operating state of the wind deflector. Then, the air conditioner obtains the data collected by the radar module at the current moment: the wind wheel speed is 1500 rpm, and the wind deflector is in the up and down sweeping state, and determines that the interference signal corresponding to the data is H5.

Step S30, filtering an intermediate frequency signal collected by the radar module based on the interference signal.

In this embodiment, after the interference signal corresponding to the operating state and/or operating parameter is determined, the intermediate frequency signal collected by the radar module at the current moment is filtered according to the frequency of the interference signal.

In some embodiments, the filtering processing method can be to obtain the current operating parameters and/or the interference signal corresponding to the current operating state of the air outlet component at the current moment, and the intermediate frequency signal collected by the radar module at the same moment, as the intermediate frequency signal to be processed. Then the interference signal part in the intermediate frequency signal to be processed is determined based on the obtained interference signal, and after filtering the interference signal part, the intermediate frequency signal after eliminating the motion interference of the air outlet component inside the air conditioner is obtained.

Step S40, determining a radar detection result according to the filtered intermediate frequency signal.

In this embodiment, after the filtered intermediate frequency signal is obtained, the radar detection result is determined according to the intermediate frequency signal.

In some embodiments, when a human body appears in the detection area of the radar module, the wavelength of the intermediate frequency signal generated in the radar module will be lengthened, and the closer the human body is to the radar module, the greater the value of the wavelength lengthening. Based on this principle, the wavelength change of the intermediate frequency signal when the human body enters the detection area from outside the detection area can be recorded as the wavelength change threshold. When the wavelength change between the intermediate frequency signal collected by the radar module at the current moment and the historical intermediate frequency signal collected at the previous moment is greater than the wavelength change threshold, it is determined that the distance from the human body to the air conditioner is less than the distance threshold, and the radar detection result is that the human body exists in the detection area of the radar module. If the wavelength change is less than or equal to the wavelength change threshold, it is determined that the distance from the human body to the air conditioner is greater than or equal to the distance threshold, and the radar detection result is that the human body does not exist in the detection area of the radar module.

In the technical solution provided in this embodiment, by eliminating the interference signal part in the intermediate frequency signal collected by the radar module in the air conditioner, the error in the intermediate frequency signal collected in the radar module caused by the movement of the air outlet component inside the air conditioner is avoided, thereby achieving the effect of improving the accuracy of radar detection.

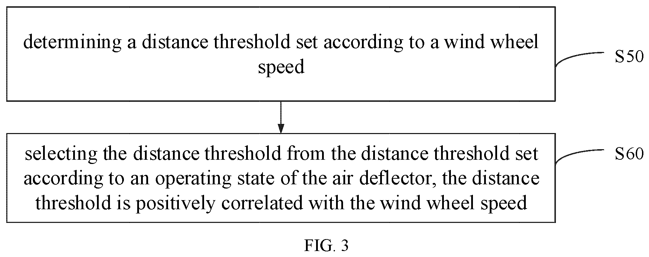

As shown in FIG. 3, in the second embodiment, based on the first embodiment, before step S40, the following operations are further included:
step S50, determining a distance threshold set according to a wind wheel speed;
step S60, selecting the distance threshold from the distance threshold set according to an operating state of the air deflector, the distance threshold is positively correlated with the wind wheel speed.

In some implementations, in this embodiment, the distance threshold is not a fixed constant, but a variable. During the detection process of the radar module, since the internal air outlet component of the air conditioner will affect the accuracy of the radar module detection, when the human body's activity range is small (for example, sitting under the air conditioner for a long time) and the movement of the internal air outlet component is more violent, the radar module may misjudge that there is no one in the detection area. In some traditional technical solutions, this misjudgment is prevented by increasing the distance threshold, but this method will reduce the sensitivity of radar detection. Therefore, in this embodiment, the distance threshold is set as a variable, and the size of the distance threshold is determined according to the current operating parameters and current operating state of the air outlet component of the air conditioner.

Specifically, firstly, a distance threshold set including multiple distance thresholds is determined according to the wind wheel speed, and then the corresponding distance threshold is selected from the distance threshold set according to the operating state of the air deflector, where the greater the wind wheel speed, the greater the distance threshold is set.

For example, assuming that the current air conditioner's wind wheel speed is 1500 rpm, its corresponding distance threshold set includes three distance thresholds when the air deflector is in different operating states. The distance threshold obtained when the air deflector is in up and down sweeping is Z1, the distance threshold obtained when the air deflector is in horizontal sweeping is Z2, and the distance threshold when the air deflector is horizontal and up and down sweeping is Z3. Next, if the operating state of the air deflector of the current air conditioner is horizontal sweeping, the distance threshold is determined to be Z3. Z3 is greater than Z1, Z3 is greater than Z2, and the numerical relationship between Z1 and Z2 is not limited in this embodiment. Similarly, assuming that the air conditioner's wind wheel speed obtained at the next moment is 2000 rpm, the corresponding distance thresholds under the three different operating states (up and down sweeping, horizontal sweeping, horizontal and up and down sweeping) are Z4, Z5, and Z6 respectively. If the air deflector of the air conditioner still maintains the operating state of the previous moment, that is, the horizontal sweeping, the selected distance threshold is changed from Z3 to Z5, where Z5 is greater than Z3.

In the technical solution provided in this embodiment, by dynamically setting the distance threshold, the distance threshold is increased when the air outlet component operates more violently, and the distance threshold is reduced when the air outlet component operates more smoothly, thereby avoiding the situation where the distance between the human body and the air conditioner detected by the radar module changes due to the motion interference of the air outlet component when the person is still in the detection area, resulting in a false judgment that no human body exists in the detection area, and the accuracy of detection is improved.

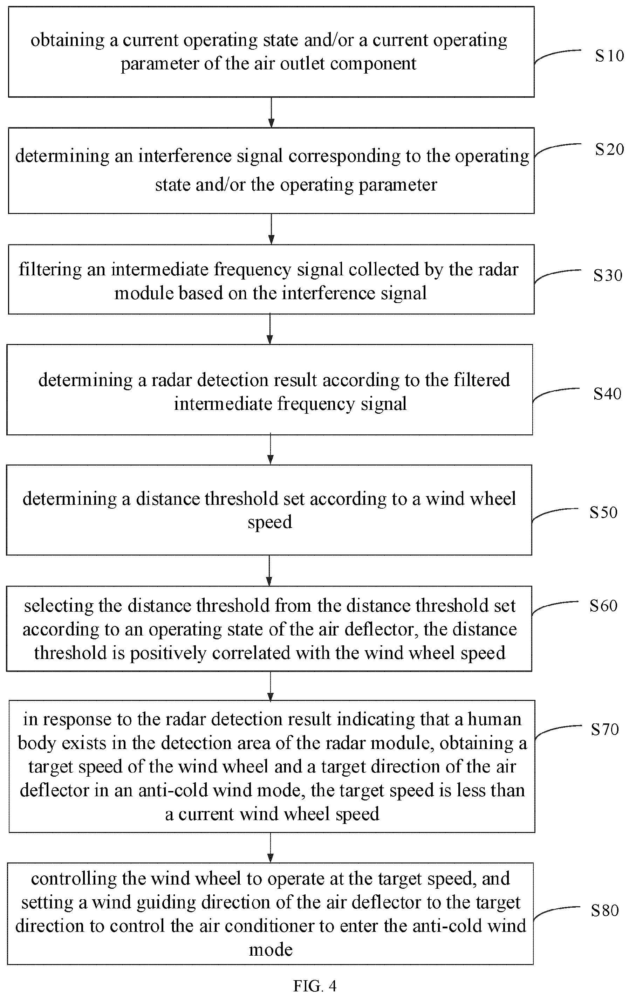

As shown in FIG. 4, in a third embodiment, based on any one of the above embodiments, after step S40, the method further includes:
step S70, in response to the radar detection result indicating that a human body exists in the detection area of the radar module, obtaining a target speed of the wind wheel and a target direction of the air deflector in an anti-cold wind mode, the target speed is less than a current wind wheel speed; and
step S80, controlling the wind wheel to operate at the target speed, and setting a wind guiding direction of the air deflector to the target direction to control the air conditioner to enter the anti-cold wind mode.

In this embodiment, the air outlet component includes a wind wheel and an air deflector. After determining the radar detection result, if the radar module determines that there is a human body in the detection area, the air conditioner is controlled to enter the anti-cold wind mode. In the anti-cold wind mode, the number of rotations of the wind wheel in the air conditioner is reduced, and the direction of the air deflector is adjusted to a target direction that does not blow directly towards people. For example, the target direction can be a direction 45 degrees upward relative to the horizontal opening.

In addition, if the ambient humidity in the surrounding environment of the air conditioner is greater than a preset humidity threshold, the compressor frequency of the air conditioner will also be increased accordingly.

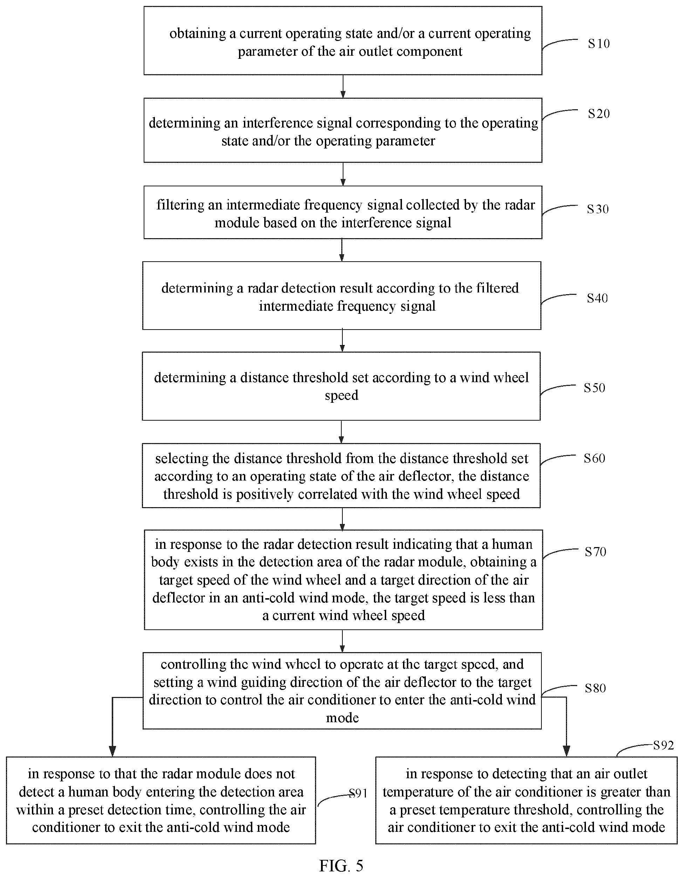

As shown in FIG. 5, after step S80, the following steps are further included:
step S91, in response to that the radar module does not detect a human body entering the detection area within a preset detection time, controlling the air conditioner to exit the anti-cold wind mode; or,
step S92, in response to detecting that an air outlet temperature of the air conditioner is greater than a preset temperature threshold, controlling the air conditioner to exit the anti-cold wind mode.

In some implementations, after the air conditioner is controlled to enter the anti-cold wind mode, the air conditioner is also controlled to exit the anti-cold wind mode after the air conditioner meets certain conditions. In this embodiment, when the air conditioner exits the anti-cold wind mode, the air outlet component in the air conditioner is restored to the operating parameters and/or operating state before entering the anti-cold wind mode.

In some embodiments, the radar module of the air conditioner is set with a preset detection time, and when no human body is detected entering the detection area within the detection time, the air conditioner is controlled to exit the anti-cold wind mode. In an embodiment, the preset detection time can be 30S.

In some embodiments, a temperature sensor is provided inside the air conditioner, and the temperature sensor is used to detect the outlet temperature of the air conditioner. When the temperature sensor detects that the outlet temperature of the air conditioner is greater than a preset temperature threshold, the air conditioner is controlled to exit the anti-cold wind mode. In some embodiments, the preset temperature threshold may be 24°C.

In the technical solution provided in this embodiment, if the radar detection result shows that there is a human body in the detection area of the radar module, the air conditioner is controlled to enter the anti-cold wind mode, and when certain conditions are met, the air conditioner is controlled to exit the anti-cold wind mode. On the basis of the first embodiment and the second embodiment, an application of the radar detection result obtained after eliminating the interference of the air outlet component is provided.

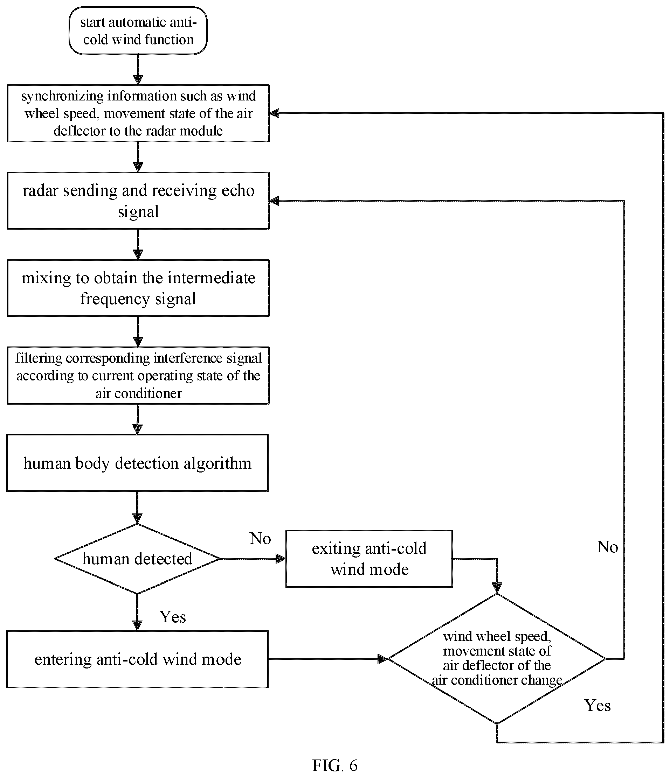

As shown in FIG. 6, the fourth embodiment is an embodiment that integrates the above-mentioned embodiments into a whole. In this embodiment, after the user sets the automatic anti-cold wind function, the radar module continuously sends and receives echo signals, and obtains the intermediate frequency signal by mixing the echo signal and the original transmission signal. The air conditioner synchronizes the movement state information of the wind wheel and the air deflector to the radar module; the radar module filters out the corresponding interfering intermediate frequency signal according to the current state of the wind wheel and the air deflector; the radar module processes and analyzes the filtered intermediate frequency signal, calculates the distance between the human body and the air conditioner, and determines whether the human body enters the preset target area according to the distance. When a person is detected to enter the preset range, the anti-cold wind mode is turned on to prevent the cold wind from blowing directly on the user; if the human body is not detected to enter the target area, the anti-cold wind mode is exited. In addition, if the movement state of the wind wheel and the air deflector of the air conditioner changes, the step of synchronizing the information such as the number of rotations of the wind wheel and the movement state of the air deflector to the radar module is returned.

In addition, it can be understood by those skilled in the art that all or part of the processes in the method for implementing the above embodiment can be completed by instructing the relevant hardware through a computer program. The computer program includes program instructions, and the computer program can be stored in a storage medium, which is a computer-readable storage medium. The program instructions are executed by at least one processor in the air conditioner to implement the process steps of the embodiment of the above method.

Therefore, the present application further provides a computer-readable storage medium, which stores a radar detection program. When the radar detection program is executed by a processor, the steps of the radar detection method described in the above embodiment are implemented.

The computer-readable storage medium may be a universal serial bus (USB) flash drive, a mobile hard disk, a read-only memory (ROM), a magnetic disk, or an optical disk, etc., which are computer-readable storage medium that can store program codes.

It should be noted that since the storage medium provided in the embodiment of the present application is the storage medium used to implement the method of the embodiment of the present application, based on the method introduced in the embodiment of the present application, those skilled in the art can understand the specific structure and deformation of the storage medium, so it is not repeated here. All storage medium used in the method of the embodiments of the present application belong to the scope of protection of the present application.

Those skilled in the art will appreciate that the embodiments of the present application may be provided as methods, systems or computer program products. Therefore, the present application may take the form of a complete hardware embodiment, a complete software embodiment, or an embodiment combining software and hardware. Moreover, the present application may take the form of a computer program product implemented on one or more computer-usable storage medium (including but not limited to disk storage, CD-ROM, optical storage, etc.) including computer-usable program codes.

The present application is described with reference to the flowcharts and/or block diagrams of the methods, devices (systems), and computer program products according to the embodiments of the present application. It should be understood that each process and/or box in the flowchart and/or block diagram, as well as the combination of the processes and/or boxes in the flowchart and/or block diagram, can be implemented by computer program instructions. These computer program instructions can be provided to a processor of a general-purpose computer, a special-purpose computer, an embedded processor, or other programmable data processing device to generate a machine, so that the instructions executed by the processor of the computer or other programmable data processing device generate a device for implementing the functions specified in one process or multiple processes in the flowchart and/or one box or multiple boxes in the block diagram.

These computer program instructions may also be stored in a computer-readable memory that can direct a computer or other programmable data processing device to work in a specific manner, so that the instructions stored in the computer-readable memory produce a manufactured product including an instruction device that implements the functions specified in one or more processes in the flowchart and/or one or more boxes in the block diagram.

These computer program instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more processes in the flowchart and/or one or more boxes in the block diagram.

It should be noted that in the claims, any reference signs placed between brackets shall not be construed as limiting the claims. The word "comprising" does not exclude the presence of components or steps not listed in the claims. The word "a" or "an" preceding a component does not exclude the presence of a plurality of such components. The present application may be implemented by means of hardware comprising several different components and by means of a suitably programmed computer. In a unit claim enumerating several means, several of these means may be embodied by the same item of hardware. The use of the words first, second, and third etc., does not indicate any order. These words may be interpreted as names.

Although some embodiments of the present application have been described, those skilled in the art, once aware of the basic inventive concept, may make further changes and modifications to these embodiments. Therefore, the appended claims are intended to be interpreted as encompassing the embodiments as well as all changes and modifications that fall within the scope of the present application.

It is apparent that those skilled in the art may make various modifications and variations to the present application without departing from its spirit and scope. Accordingly, if such modifications and variations fall within the scope of the claims of the present application and their equivalents, the present application is also intended to encompass these modifications and variations.

## Claims

1. A radar detection method, applied to an air conditioner provided with a radar module and an air outlet component, comprising:
obtaining a current operating state and/or a current operating parameter of the air outlet component;
determining an interference signal corresponding to the operating state and/or the operating parameter;
filtering an intermediate frequency signal collected by the radar module based on the interference signal; and
determining a radar detection result according to the filtered intermediate frequency signal.

2. The method of claim 1, wherein said determining the interference signal corresponding to the operating state and/or the operating parameter comprises:
obtaining a historical intermediate frequency signal collected by the radar module in response to that no human body exists in a detection area of the radar module; and
determining the interference signal corresponding to the operating state and/or the operating parameter according to the historical intermediate frequency signal.

3. The method of claim 2, wherein the air outlet component comprises a wind wheel and an air deflector, the operating parameter comprises a wind wheel speed, the operating state comprises that the air deflector is in an up and down wind sweeping state and/or a horizontal wind sweeping state, and the method further comprises before determining the interference signal corresponding to the operating state and/or the operating parameter:
determining the intermediate frequency signal collected by the radar module as the historical intermediate frequency signal in response to that no human body exists in the detection area at a historical moment and the wind wheel is at different wind wheel speeds; or
determining the intermediate frequency signal collected by the radar module as the historical intermediate frequency signal in response to that no human body exists in the detection area at a historical moment, the air deflector is in the up and down wind sweeping state, and the wind wheel is at different wind wheel speeds; or
determining the intermediate frequency signal collected by the radar module as the historical intermediate frequency signal in response to that no human body exists in the detection area at a historical moment, the air deflector is in the horizontal wind sweeping state, and the wind wheel is at different wind wheel speeds; or
determining the intermediate frequency signal collected by the radar module as the historical intermediate frequency signal in response to that no human body exists in the detection area at a historical moment, the air deflector is in both a horizontal wind sweeping state and an up and down wind sweeping state, and the wind wheel is at different wind wheel speeds; and
associating and storing the historical intermediate frequency signal with the wind wheel speed and/or the operating state of the air deflector corresponding to the historical intermediate frequency signal.

4. The method of claim 1, wherein said filtering the intermediate frequency signal collected by the radar module based on the interference signal comprises:
obtaining the interference signal corresponding to the air outlet component under the current operating parameter and/or the current operating state, and an intermediate frequency signal to be processed collected by the radar module of the air outlet component at a current moment; and
filtering the intermediate frequency signal to be processed based on the interference signal to obtain the filtered intermediate frequency signal.

5. The method of claim 1, wherein said determining the radar detection result according to the filtered intermediate frequency signal comprises:
determining a distance between a human body and the air conditioner according to the filtered intermediate frequency signal;
in response to that the distance is less than a distance threshold, determining that the radar detection result is that a human body exists in a detection area of the radar module; or
in response to that the distance is greater than or equal to the distance threshold, determining that the radar detection result is that no human body exists in the detection area of the radar module.

6. The method of claim 5, wherein the air outlet component comprises a wind wheel and an air deflector, and the method further comprises before determining the radar detection result according to the filtered intermediate frequency signal:
determining a distance threshold set according to a wind wheel speed; and
selecting the distance threshold from the distance threshold set according to an operating state of the air deflector, wherein the distance threshold is positively correlated with the wind wheel speed.

7. The method of claim 1, wherein the air outlet component comprises a wind wheel and an air deflector, and the method further comprises after determining the radar detection result according to the filtered intermediate frequency signal:
in response to the radar detection result indicating that a human body exists in a detection area of the radar module, obtaining a target speed of the wind wheel and a target direction of the air deflector in an anti-cold wind mode, wherein the target speed is less than a current wind wheel speed; and
controlling the wind wheel to operate at the target speed, and setting a wind guiding direction of the air deflector to the target direction to control the air conditioner to enter the anti-cold wind mode.

8. The method of claim 7, wherein the method further comprises after controlling the wind wheel to operate at the target speed, and setting the wind guiding direction of the air deflector to the target direction to control the air conditioner to enter the anti-cold wind mode:
in response to that the radar module does not detect a human body entering the detection area within a preset detection time, controlling the air conditioner to exit the anti-cold wind mode; or
in response to detecting that an air outlet temperature of the air conditioner is greater than a preset temperature threshold, controlling the air conditioner to exit the anti-cold wind mode.

9. An air conditioner, comprising:
a radar module;
a memory;
a processor; and
a radar detection program stored in the memory and executable on the processor,
wherein when the radar detection program is executed by the processor, the radar detection method of any one of claims 1 to 8 is implemented.

10. A computer-readable storage medium, wherein a radar detection program is stored on the computer-readable storage medium, and when the radar detection program is executed by a processor, the radar detection method of any one of claims 1 to 8 is implemented.
